# EUROPÄISCHE PATENTSCHRIFT

(11) **EP 0 595 059 B1**
(45) Veröffentlichungstag und Bekanntmachung des Hinweises auf die Patenterteilung: **12.06.1996**
(21) Anmeldenummer: 93115880.2
(22) Anmeldetag: 01.10.1993
(51) Int. Cl.: F16H 3/091

(54) **Gangschaltgetriebe eines Kraftfahrzeuges**
Change gear transmission for a motor vehicle
Boîte de vitesses pour véhicule automobile

(30) Priorität: 24.10.1992 DE 4236000
(43) Veröffentlichungstag der Anmeldung: 04.05.1994
(73) Patentinhaber: Dr.Ing. h.c. F. Porsche Aktiengesellschaft, D-70435 Stuttgart-Zuffenhausen (DE)
(72) Erfinder: Mauritz, Erwin, D-75446 Wiernsheim (DE)

(56) Entgegenhaltungen:
- EP-A- 0 128 319
- EP-A- 0 375 420
- DE-A- 3 830 026
- DE-A- 4 116 189

## Beschreibung

Die Erfindung betrifft ein Gangschaltgetriebe eines Kraftfahrzeuges nach dem Oberbegriff des Anspruches 1.

Bei einem derartigen, aus der EP-A-375 420 bekannten Gangschaltgetriebe sind in einem Getriebegehäuse eine Antriebswelle, eine Abtriebswelle und eine Nebenwelle angeordnet, auf denen mehrere Radsätze zur Bildung von Vorwärtsgängen und einem Rückwärtsgang angeordnet sind. Der erste Getriebegang wird bei diesem Gangschaltgetriebe durch Mehrfachnutzung eines vorhandenen Radsatzes gebildet, wobei der Radsatz des Rückwärtsganges genutzt wird und gleichzeitig ein auf der Nebenwelle sitzendes Festrad mit dem Radpaar eines anderen Getriebeganges kämmt. Durch diese Mehrfachnutzung eines Radsatzes eines der Vorwärtsgänge kann auf einen zusätzlichen Radsatz für den ersten Getriebegang verzichtet werden. Ein derartiges Getriebe baut daher relativ kurz und kommt mit einer geringen Anzahl von Radsätzen aus.

Aus der DE-A 38 30 026 ist weiterhin ein Gangschaltgetriebe bekannt, bei dem zur Bildung des Rückwärtsganges zwei Vorwärtsgang-Radpaare und zwei auf einer Zwischenwelle gelagerte Zwischenräder verwendet werden. Die Zwischenräder sind durch eine schaltbare Kupplung miteinander drehmomentübertragend verbindbar. Das eine Zwischenrad kämmt mit dem Festrad des ersten Ganges G1, das andere Zwischenrad mit dem Losrad des dritten Ganges G3. Bei geschlossener Kupplung läuft der Kraftfluß von der Eingangswelle des Getriebes über das Festrad des ersten Getriebeganges G1 auf das erste Zwischenrad, über die Kupplung auf das zweite Zwischenrad, auf das Losrad G3 und schließlich auf das mit ihm kämmende, zur Ausgangswelle drehfeste Festrad von G3. Auf diese Weise kann das sonst übliche Radpaar des Rückwärtsganges eingespart werden.

Es ist demgegenüber die Aufgabe der Erfindung, ein Gangschaltgetriebe nach der Gattung des Patentanspruches 1 dahingehend zu verbessern, daß eine weitere Verkürzung der Baulänge erreicht und die Zahl der Zahnräder bzw. Radsätze verringert wird.

Zur Lösung dieser Aufgabe dienen die kennzeichnenden Merkmale des Anspruches 1. Wenn zur Bildung eines hochuntersetzenden ersten Ganges der Kraftfluß über den Radsatz des Rückwärtsganges und das Radpaar des fünften Ganges läuft, ist ein Zahnradpaar für den ersten Gang entbehrlich. Die Baulänge und Herstellkosten des Getriebes sind geringer. Es ist lediglich erforderlich, die Welle des Rückwärtsgang-Zwischenrades als Nebenwelle zu verlängern und auf ihr ein Festrad anzuordnen, das mit dem Radsatz des fünften Ganges kämmt. Zum Schalten des ersten Ganges wird das Zwischenrad des Rückwärtsganges über eine halbe Synchronisierkupplung mit der Nebenwelle verbunden. Durch Nutzen des Radsatzes bzw. Festrades eines weiteren Getriebeganges und dessen Kopplung mit einem auf der Nebenwelle gelagerten und mit ihr koppelbaren Losrades ist eine weitere Verkürzung des Gangschaltgetriebes möglich. Auf einen separaten Radsatz für den zweiten Getriebegang kann somit verzichtet werden. Dadurch wird gegenüber dem Stand der Technik eine erhebliche Reduzierung der Baulängen und der Radsätze bzw. Zahnräder erreicht.

Zum Schalten des ersten Ganges wird das Zwischenrad des Rückwärtsganges, zum Schalten des zweiten Ganges, das weitere Losrad mit der Nebenwelle gekuppelt. Zum Schalten aller Gänge ist jeweils nur eine Kupplung zu betätigen. Das Schaltbild ist identisch mit der üblichen H-Schaltung. Ein auf diese Weise gestaltetes Sechs-Gang-Getriebe benötigt für die Vorwärtsgänge nur 4 hintereinanderliegende Radpaare. Da die Baulänge extrem kurz wird, eignet sich ein solches Getriebe bestens für einen Quereinbau an der Vorderachse des Kraftfahrzeuges.

Ein Ausführungsbeispiel der Erfindung ist in der Zeichnung dargestellt und wird nachfolgend erläutert.

Es zeigen:
- Fig. 1: Vorderachse eines Kraftfahrzeuges mit quer eingebautem Motor und Gangschaltgetriebe nach der Erfindung in Prinzip-darstellung mit weiterem Radsatz
- Fig. 2: Längsschnitt eines 3-Wellen-Getriebes

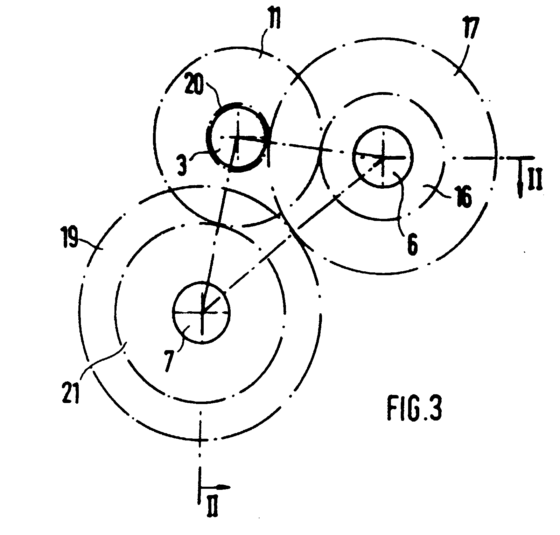

- Fig. 3: Räderplan zum Schalten des ersten Ganges
- Fig. 4: Längsschnitt eines 3-Wellen-Getriebes in Kurzbauweise entsprechend der Erfindung

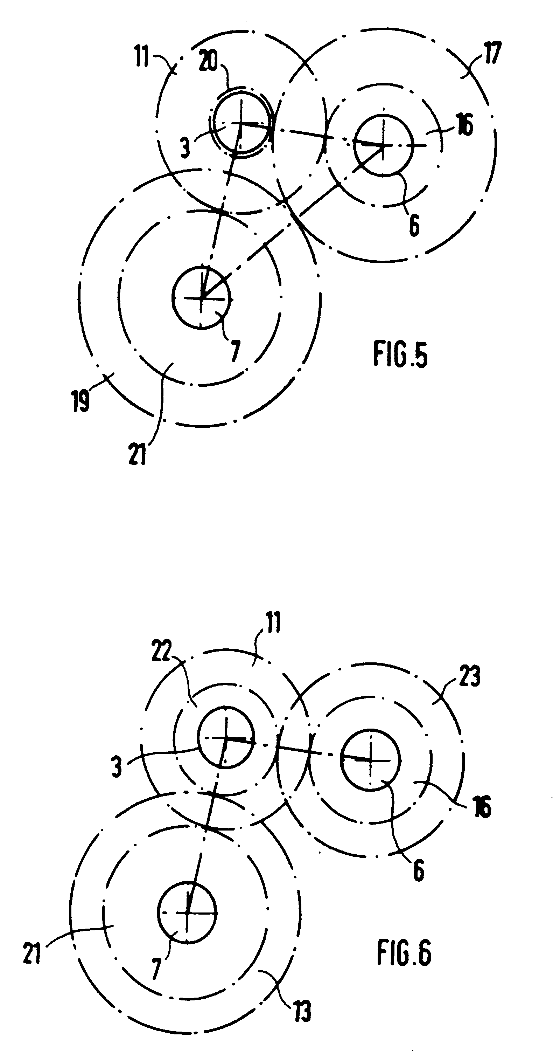

- Fig. 5: Räderplan zum Schalten des ersten Ganges bei einem Getriebe nach Fig. 4
- Fig. 6: Räderplan zum Schalten des zweiten Ganges bei einem Getriebe nach Figur 4

Nahe der Vorderachse 1 eines Kraftfahrzeuges ist querliegend ein Hubkolbenmotor 2 eingebaut. Eine von ihm ausgehende Antriebswelle 3 ist in einem ebenfalls querliegenden, synchronisierten Gangschaltgetriebe 4 gelagert. Parallel zur Antriebswelle 3 sind im Getriebegehäuse 5 eine Nebenwelle 6 und eine Abtriebswelle 7 gelagert, von der über ein Stirnradpaar 8 und ein Ausgleichsgetriebe 9 die Vorderachse 1 angetrieben wird.

Die Antriebswelle, Abtriebswelle und Nebenwelle sind endseitig in Kegelrollenlagern 10 im Getriebegehause 5 gelagert. Zwischen der Antriebswelle 3 und Abtriebswelle 7 sind in dieser Reihenfolge angeordnet: der Rückwartsgang R, der dritte Gang G3, der zweite Gang G2, der fünfte Gang G5 und der vierte Gang G4.
Auf der Antriebswelle 3 sind die Losrader 11 und 12 der Gänge G5 und G4, auf der Abtriebswelle 7 die Losrader 13 und 14 der Gange G3 und G2 gelagert. Durch Synchronisierkupplungen 15 sind die Losrader mit der zugehörigen Welle kuppelbar.

Zur Bildung des ersten Ganges G1 sitzt auf der Nebenwelle 6 ein Festrad 16, das mit dem Losrad 11 des fünften Ganges G5 kämmt. Ein Zwischenrad 17 des R-Ganges ist ebenfalls auf der Nebenwelle 6 gelagert und mit ihr durch eine halbe Synchronisierkupplung 18 verbindbar. Das Losrad 19 des R-Ganges ist auf der Abtriebswelle 7 gelagert und mit ihr durch eine halbe Synchronisierkupplung 18 kuppelbar.

Zum Schalten des ersten Ganges wird das mit dem Festrad 20 des R-Ganges kämmende Zwischenrad mit der Nebenwelle 6 gekuppelt. Über das Festrad 16 der Nebenwelle 6 läuft der Kraftfluß zum Losrad 11 von G5, zu dem mit ihm kammenden Festrad 21 von G5 und zur Abtriebswelle 7.

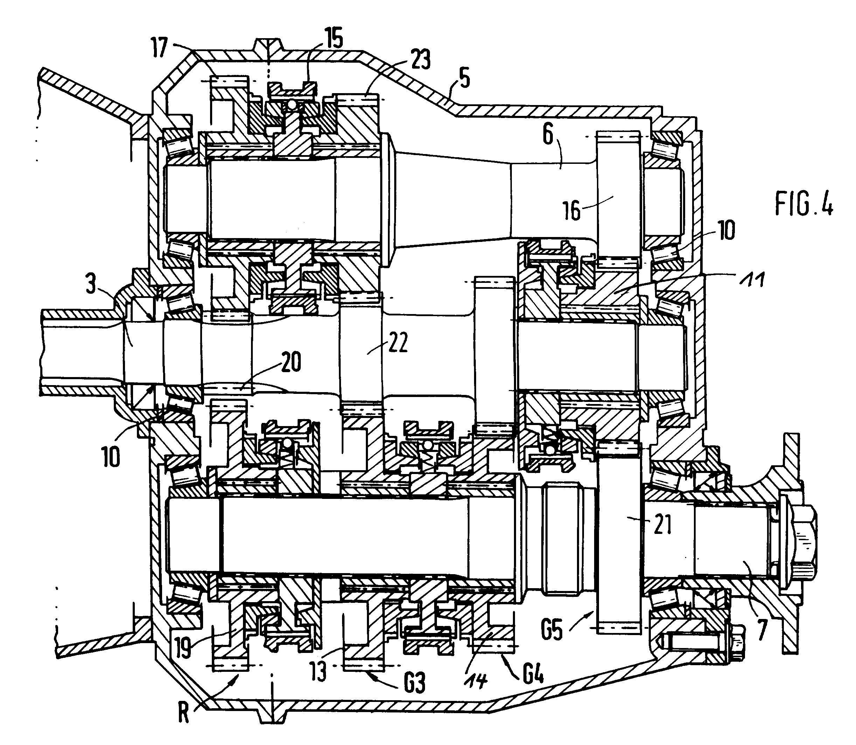

Bei einer erfindungsgemäßen Getriebeanordnung nach Fig. 4 wird auch ein zweiter Getriebegang durch Mehrfachnutzung vorhandener Radpaare gebildet. Zwischen der Antriebswelle 3 und der Abtriebswelle 7 liegen die Gange in der Reihenfolge: R-Gang, G3, G4, G5. Mit dem Festrad von G3, das auf der Antriebswelle 3 sitzt, kämmt ein weiteres, auf der Nebenwelle 6 gelagertes Losrad 23. Es liegt benachbart dem Zwischenrad 17 des R-Ganges und ist mittels einer zwischen den Rädern 17 und 23 angeordneten Synchronisierkupplung 15 mit der Nebenwelle 6 kuppelbar.

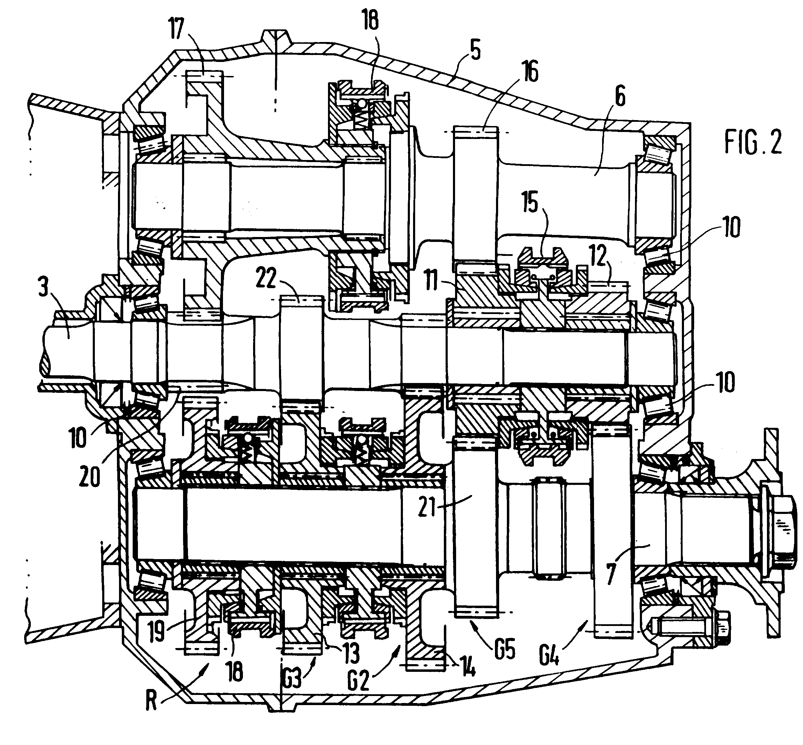

Die Schaltung und der Kraftfluß des ersten Ganges G1 erfolgt genauso, wie in Fig. 2 beschrieben. Zum Schalten des zweiten Ganges wird das Losrad 23 mit der Nebenwelle 6 gekuppelt. Der Kraftfluß geht vom Festrad 22 von G3 auf das Losrad 23, die Nebenwelle 6, das Festrad 16, das Losrad 11 von G5 und schließlich auf das Festrad 21 von G5 und die Abtriebswelle 7.

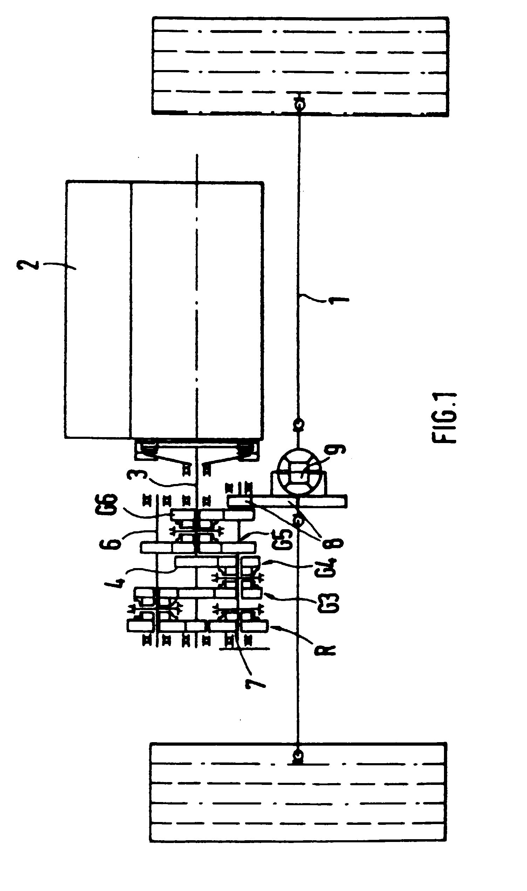

Mit dieser Anordnung kann ein 5-Gang-Getriebe sehr kurzer Baulänge realisiert werden. Wenn nach Fig. 1 neben dem Radpaar von G5 ein weiteres Radpaar eingesetzt wird, läßt sich bei geringfügig größerer Baulänge auch ein 6-Gang-Getriebe verwirklichen. Wegen der kurzen Baulänge eignen sich solche Getriebe besonders gut zum Quereinbau an der Vorderachse.

## Patentansprüche

1. Gangschaltgetriebe eines Kraftfahrzeuges, mit mehreren durch Synchronisierkupplungen schaltbaren Vorwärtsgängen und einem Rückwärtsgang, deren Radsätze auf einer Antriebswelle (3), einer parallelliegenden Abtriebswelle (7) und einer Nebenwelle (6) angeordnet sind, wobei mindestens ein Getriebegang durch Mehrfachnutzung vorhandener Radsätze gebildet ist, wobei ein hochuntersetzender erster Getriebegang aus dem Radsatz des Rückwärtsganges und einem auf der Nebenwelle (6) sitzenden und mit einem Rad eines Radsatzes eines anderen Getriebeganges kämmendes Festrad (16) gebildet ist,
**dadurch gekennzeichnet,**
- daß das Nebenwellen-Festrad (16) mit einem Rad (11) des Radsatzes (11, 21) des höchsten Getriebeganges kämmt, und
- daß ein zweiter Getriebegang durch das mit dem Rad (11) des Radsatzes (11, 21) des höchsten Getriebeganges kämmende Nebenwellen-Festrad (16) und ein mit einem Festrad eines weiteren Getriebeganges kämmendes auf der Nebenwelle (6) gelagertes und mit ihr kuppelbares Losrad (23) gebildet ist.

2. Gangschaltgetriebe nach Anspruch 1,
**dadurch gekennzeichnet,**
daß zur Bildung des zweiten Getriebeganges das Nebenwellen-Losrad (23) mit dem Festrad (22) des dritten Getriebeganges kämmt.

3. Gangschaltgetriebe nach Anspruch 1 oder 2, **dadurch gekennzeichnet,**
- daß auf der Antriebswelle (3) und Abtriebswelle (7) in dieser Reihenfolge die aus Festrad und Losrad bestehenden Radsätze des Rückwärtsganges, des dritten Getriebeganges, des vierten Getriebeganges und des fünften Getriebeganges, welcher der höchste Getriebegang ist, angeordnet sind, und
- daß die Nebenwelle (6) ein drehbar gelagertes Zwischenrad (17) des Rückwärtsganges enthält, welches zur Bildung des ersten Getriebeganges mit der Nebenwelle (6) kuppelbar ist.

4. Gangschaltgetriebe nach Anspruch 3,
**dadurch gekennzeichnet,**
daß auf der Nebenwelle (6) zwischen dem Losrad (23), das mit dem Festrad (22) des dritten Getriebeganges kämmt, und dem Zwischenrad (17) eine Synchronisierkupplung (15) angeordnet ist, mit der entweder das Losrad (23) zur Bildung des zweiten Getriebeganges oder das Zwischenrad (17) zur Bildung des ersten Getriebeganges mit der Nebenwelle (6) kuppelbar ist.

5. Gangschaltgetriebe nach einem der vorangegangenen Ansprüche, **dadurch gekennzeichnet,**
daß die Losräder (19, 13, 14) des Rückwärtsganges, des dritten Getriebeganges und des vierten Getriebeganges auf der Abtriebswelle (7) und das Losrad (11) des fünften Getriebeganges auf der Antriebswelle (3) drehbar gelagert und mit der jeweiligen Welle kuppelbar sind.

## Claims

1. A gear-change transmission of a motor vehicle, with a plurality of forward gears shiftable by synchronizing couplings and with a reverse gear, of which the sets of gearwheels are arranged on a drive shaft (3), a driven shaft (7) arranged parallel thereto and a layshaft (6), wherein at least one gear is formed by the multiple use of existing sets of gearwheels, wherein a greatly stepped-down first gear is formed by the set of gearwheels of the reverse gear and a fixed gearwheel (16) mounted on the layshaft (6) and meshing with a gearwheel of a set of gearwheels of another gear, **characterized in that**
- the fixed gearwheel (16) of the layshaft meshes with a gearwheel (11) of the set of gearwheels (11, 21) of the highest gear, and
- a second gear is formed by the fixed gearwheel (16) of the layshaft meshing with the gearwheel (11) of the set of gearwheels (11, 21) of the highest gear and by a loose gearwheel (23) which meshes with a fixed gearwheel of a further gear and is mounted on the layshaft (6) and which can be coupled to the said layshaft (6).

2. A gear-change transmission according to Claim 1, **characterized in that**, in order to form the second gear, the loose gearwheel (23) of the layshaft meshes with the fixed gearwheel (22) of the third gear.

3. A gear-change transmission according to Claim 1 or 2, **characterized in that**
- the sets of gearwheels - comprising a fixed gearwheel and a loose gearwheel - of the reverse gear, the third gear, the fourth gear and the fifth gear, which is the highest gear, are arranged in this sequence on the drive shaft (3) and the driven shaft (7), and
- the layshaft (6) contains a rotatably mounted intermediate gearwheel (17) of the reverse gear, which can be coupled to the layshaft (6) in order to form the first gear.

4. A gear-change transmission according to Claim 3, **characterized in that** a synchronizing coupling (15) is mounted on the layshaft (6) between the loose gearwheel (23), meshing with the fixed gearwheel (22) of the third gear, and the intermediate gearwheel (17), the synchronizing coupling (15) being capable of being coupled either to the loose gearwheel (23) in order to form the second gear or to the intermediate gearwheel (17) in order to form the first gear.

5. A gear-change transmission according to one of the preceding Claims, **characterized in that** the loose gearwheels (19, 13, 14) of the reverse gear, the third gear and the fourth gear are mounted rotatably on the driven shaft (7) and the loose gearwheel (11) of the fifth gear is mounted rotatably on the drive shaft (3), and they can be coupled to the respective shaft.

## Revendications

1. Boîte de vitesses à étagement pour un véhicule automobile, comportant plusieurs rapports avant pouvant être commutés au moyen d'accouplements de synchronisation et un rapport arrière, dont les jeux de pignons sont disposés sur un arbre d'entraînement (3), un arbre entraîné (7) placé parallèlement et un arbre annexe (6), au moins un rapport étant constitué par l'utilisation multiple de jeux de pignons existants, un premier rapport fortement démultiplié étant constitué du jeu de pignons du rapport de marche arrière et d'un pignon fixe (16) siégeant sur l'arbre annexe (6) et s'engrenant avec un pignon appartenant à un jeu de pignons d'un autre rapport de la boîte,
caractérisée en ce que
- le pignon fixe d'arbre annexe (16) s'engrène avec un pignon (11) du jeu de pignons (11, 21) du rapport le plus élevé, et
- un deuxième rapport est constitué par le pignon fixe d'arbre annexe (16), s'engrenant avec le pignon (11) du jeu de pignons (11, 21) du rapport le plus élevé et un pignon fou (23) s'engrenant avec un pignon fixe d'un autre rapport et tourillonnant sur l'arbre annexe (6) et pouvant être couplé avec lui.

2. Boîte de vitesses à étagement selon la revendication 1,
caractérisée en ce que
pour constituer le deuxième rapport le pignon fou (23) d'arbre annexe s'engrène avec le pignon fixe (22) du troisième rapport.

3. Boîte de vitesses à étagement selon la revendication 1 ou 2,
caractérisée en ce que
- sur l'arbre d'entraînement (3) et l'arbre mené (7) sont disposés, dans cet ordre de succession, les jeux de pignons constitués d'un pignon fixe et d'un pignon fou, de la marche arrière, du troisième rapport, du quatrième rapport et du cinquième rapport, qui est le rapport le plus élevé de la boîte, et
- en ce que l'arbre annexe (6) contient un pignon intermédiaire (17), monté à rotation, de la marche arrière, qui peut être couplé à l'arbre annexe (6) pour constituer le premier rapport.

4. Boîte de vitesses à étagement selon la revendication 3,
caractérisée en ce que
sur l'arbre annexe (6), entre le pignon fou (23) qui s'engrène avec le pignon fixe (22) du troisième rapport et le pignon intermédiaire (17), est disposé un accouplement de synchronisation (15), à l'aide duquel peut être couplé à l'arbre annexe (6), soit le pignon fou (23) pour constituer le deuxième rapport, soit le pignon intermédiaire (17) pour constituer le premier rapport.

5. Boîte de vitesses à étagement selon l'une des revendications précédentes, caractérisée en ce que
les pignons fous (19, 13, 14) de la marche arrière, du troisième rapport et du quatrième rapport sont montés à rotation sur l'arbre entraîné (7) et le pignon fou (11) du cinquième rapport est monté à rotation sur l'arbre d'entraînement (3) et peut être couplé avec l'arbre respectif.
